# EUROPÄISCHE PATENTANMELDUNG

(11) **EP 4 269 319 A2**
(43) Veröffentlichungstag der Anmeldung: **01.11.2023**
(21) Anmeldenummer: 23196454.5
(22) Anmeldetag: 03.02.2020
(51) Int. Cl.: B66F 9/06, B66F 9/075, B66F 9/24, G05D 1/02

(54) **FÖRDEREINRICHTUNG FÜR LADUNGSTRÄGER**

(30) Priorität: 15.02.2019 DE 102019001125; 01.03.2019 DE 102019001455
(62) Teilanmeldung aus: 20703222.8
(71) Anmelder: Filics GmbH, 80807 München (DE)
(72) Erfinder: Lutzer, Johannes Julius, Munich (DE); Kolls, Gregor, Munich (DE)
(74) Vertreter: SSM Sandmair

(57) **Zusammenfassung**

Erkennungsverfahren für eine Fördereinrichtung (10) zum Fördern von beladenen oder unbeladenen Ladungsträgern (16), wobei
- die Fördereinrichtung (10) eine erste Fördereinheit (12a) und eine zweite Fördereinheit (12b) aufweist, wobei
- jede Fördereinheit (12a, 12b) relativ zur jeweils anderen Fördereinheit (12a, 12b) und unabhängig von der jeweils anderen Fördereinheit (12a, 12b) entlang einer beliebigen Fahrtrichtung bewegbar ist, und
- jede Fördereinheit (12a, 12b) jeweils ein Sensorsystem (25) zur Detektion von Umgebungsparametern und ein Steuersystem zur Steuerung der jeweiligen Fördereinheit (12a, 12b) umfasst, wobei eine Detektionsebene (19) des Sensorsystems (25) den Ladungsträger (16) im nicht-gehobenen Zustand zumindest teilweise schneidet, und
- die detektierten Umgebungsparameter vom Sensorsystem (25) an das Steuersystem übertragen werden,
wobei
- das Steuersystem dazu ausgebildet ist, anhand der detektierten Umgebungsparameter Ladungsträger (16) im Umfeld der Fördereinheit zu erkennen.

## Beschreibung

Die Erfindung betrifft eine Fördereinrichtung zum Fördern von beladenen und unbeladenen Ladungsträgern. Die Fördereinrichtung weist eine erste Fördereinheit und eine zweite Fördereinheit auf, wobei beide Fördereinheiten unabhängig voneinander verfahren können.

Die erste und die zweite Fördereinheit können sich dabei jeder Zeit, eigenständig oder gepaart als Fördereinrichtung, autonom beispielsweise innerhalb einer Halle bewegen. Eine solche Fördereinrichtung ist beispielsweise aus der DE 10 2007 046 868 A1 bekannt, wobei zwei Fördereinheiten eine Fördereinrichtung bilden. Eine derartige Fördereinrichtung ist dazu konzipiert, Ladungsträger, insbesondere Paletten, zu unterfahren, mithilfe einer Hub-/Senkeinheit zu heben, im angehobenen Zustand zu einem Ort zu fördern und wieder abzusetzen. Dabei kann jede Fördereinheit in ihrer Dimension so ausgestaltet sein, dass sie das Lichtraumprofil der Ladungsträger unterfahren kann.

Aus der DE 10 2008 014 877 A1 ist eine weitere beispielhafte Ausführung der Fördereinrichtung bekannt, wobei dieses System das automatische Verladen von Paletten in Lastkraftwagen ermöglicht. Hierzu bilden zwei Transportwagen ein Transportwagenpaar, welche Paletten unterfahren, diese anheben und fördern kann. Eine derartige Fördereinheit ist mit einem elektrischen Zuleitungskabel zur Energieversorgung versehen, wobei das Kabel auch als Zugseil verwendet werden kann, um Fahrwegkorrekturen vorzunehmen.

Ein kabelloses Fördersystem ist für eine uneingeschränkte Flexibilität notwendig. Dazu müssen alle notwendigen Bestandteile der Fördereinheit, eine Steuerungseinheit, mindestens eine Hub-/Senkeinheit, eine Energieversorgung und mindestens eine Antriebseinheit, bestehend aus mindestens einem angetriebenen Rad in jede Fördereinheit integriert werden. Somit ist eine hoch integrierte Bauweise erforderlich.

Für eine derartige Fördereinrichtung ist zwingend eine Kollisionswarnung erforderlich, um in nicht abgeschlossenen oder nicht eingezäunten Bereichen und somit im Umfeld von Personen zu arbeiten. Eine Möglichkeit zur Kollisionswarnung könnten dabei Detektionseinrichtungen sein. Ohne eine solche Detektionseinrichtung ist eine Anwendung wie beispielsweise in Produktions- oder Logistikbetrieben, welche keine Hallenabgrenzung vorgesehen haben, unmöglich. Besonders vorteilhaft ist es, wenn die Kollisionswarnung für jede beliebe Fahrtrichtung vorgesehen ist und somit die gesamte Flexibilität der Fördereinrichtung, beispielsweise das seitliche Verfahren der Fördereinrichtung, genutzt werden kann. Des Weiteren muss eine bodennahe Kollisionswarnung eine hohe Robustheit gewährleisten.

Ferner ist für die flexible Fördereinheit eine Orientierung im Umfeld notwendig. Dafür können verschiedene Leitsysteme vorgesehen werden. Beispielsweise können dafür Bodenmarkierungen verwendet werden, auf welche die Fördereinheit verfährt. Jedoch schränken diese die Flexibilität des Systems erneut stark ein.

Aus der DE 10 2015 010 718 A1 ist eine radarbasierte, richtungsgebundene Detektionseinrichtung für Fördereinheiten einer Fördereinrichtung bekannt.

Es ist eine Aufgabe der Erfindung eine Fördereinrichtung bereit zu stellen, welche ein flexibles, effektives und gleichzeitig kollisionssicheres Fördern von Ladungsträgern ermöglicht.

### Erkennungsverfahren

Die Aufgabe wird erfindungsgemäß durch die Merkmale des Anspruchs 1 gelöst. Vorteilhafte Weiterbildungen ergeben sich aus den abhängigen Ansprüchen, der Beschreibung und den Figuren.

Die Erfindung betrifft ein Erkennungsverfahren für eine Fördereinrichtung zum Fördern von beladenen oder unbeladenen Ladungsträgern, welche eine erste Fördereinheit und eine zweite Fördereinheit umfasst. Jede Fördereinheit ist relativ zur jeweils anderen Fördereinheit und unabhängig von der jeweils anderen Fördereinheit entlang einer beliebigen Fahrtrichtung bewegbar. Ferner umfasst jede Fördereinheit ein Sensorsystem zur Detektion von Umgebungsparametern und ein Steuersystem zur Steuerung der jeweiligen Fördereinheit, wobei eine Detektionsebene des Sensorsystems den Ladungsträger im nicht-gehobenen Zustand zumindest teilweise schneidet und die detektierten Umgebungsparameter vom Sensorsystem an das Steuersystem übertragen werden. Es ist nicht zwingend erforderlich, dass sich die Detektionsebene, bei angehobenem Ladungsträger, unter dem Ladungsträger hindurch erstreckt.

Das Erkennungsverfahren ist dadurch gekennzeichnet, dass das Steuersystem anhand der detektierten Umgebungsparameter Ladungsträger im Umfeld der Fördereinheit erkennt. Mit anderen Worten werden die Umgebungsparameter vom Steuersystem dazu genutzt, im Umfeld der jeweiligen Fördereinheit nach Ladungsträger zu suchen und diese zu erkennen bzw. zu identifizieren. Vorteilhafte Weiterbildungen des Erkennungssystems ergeben sich aus der folgenden Beschreibung und den Figuren.

Bei einer besonders bevorzugten Ausführungsform weisen die Fördereinheiten der Fördereinrichtung ein Steuersystem zur Steuerung der jeweiligen Fördereinheit auf. Das Steuersystem kann alternativ auch im Sensorsystem der jeweiligen Fördereinheit integriert sein, so dass das Steuersystem kein gesondertes und/oder eigenes Bauteil ist. Bevorzugt ist das Steuersystem als Recheneinheit, insbesondere als Computer, und/oder datenverarbeitende Vorrichtung ausgebildet. Vorteilhafterweise sind die Steuersysteme aller Fördereinheiten gleich ausgebildet und/oder verarbeiten die Daten, insbesondere die detektierten Umgebungsparameter, gleich. Beispielsweise kann dies durch die Implementierung eines identischen Algorithmus auf allen Steuersystemen bewirkt werden.

In einer beispielhaften Weiterbildung können die Steuersysteme der Fördereinheiten in funktioneller Hinsicht auch oder ausschließlich arbeitsteilig ausgebildet sein. Mit anderen Worten kann die Verarbeitung der durch die Sensorsysteme detektierten Umgebungsparameter zwischen zwei Steuersystemen von zwei Fördereinheiten aufgeteilt werden. Beispielsweise könnten die Umgebungsparameter, welche in Fahrtrichtung detektiert wurden, durch das Steuersystem der ersten Fördereinheit verarbeitet werden und die Umgebungsparameter, welche entgegen der Fahrtrichtung detektiert wurden, durch das Steuersystem der zweiten Fördereinheit verarbeitet werden. Vorteilhafterweise können die jeweiligen Ergebnisse dann unter den Steuersystemen ausgetauscht werden.

Alternativ oder zusätzlich könnte die funktionelle Arbeitsteilung der Steuersysteme beispielhafterweise auch derart ausgebildet sein, dass ein Steuersystem die Umgebungsparameter an das Steuersystem der anderen Fördereinheit weiterleitet. Die Verarbeitung der Umgebungsparameter kann dann ausschließlich oder zumindest zu einem Großteil im Steuersystem der anderen Fördereinheit stattfinden, wobei die Ergebnisse der Verarbeitung vorteilhafterweise an das ursprüngliche Steuersystem zurück übermittelt werden.

Die Erkennung der Ladungsträger durch das Steuersystem erfolgt beispielsweise durch die Identifizierung der charakteristischen Form des Ladungsträgers. Vorteilhafterweise ist die charakteristische Form eines Ladungsträgers, insbesondere die damit verbundenen bauartbedingten Abmaße des Ladungsträgers, im Steuersystem hinterlegt. Das Steuersystem gleicht daher vorteilhafterweise die detektierten Umgebungsparameter mit den bekannten charakteristischen Formen von Ladungsträgern ab und erkennt so innerhalb der Umgebung der jeweiligen Fördereinheit Ladungsträger. Alternativ kann das Steuersystem auch so ausgebildet sein, dass das Steuersystem die charakteristische Form eines Ladungsträgers durch eine externe Quelle übermittelt bekommt. Bei der charakteristischen Form des Ladungsträgers kann es sich alternativ oder zusätzlich aber auch um anderer charakteristische Merkmale eines Ladungsträgers handeln. So ist die charakteristische Form eines Ladungsträgers nicht zwingend auf seine geometrischen Abmaße beschränkt. Der Ladungsträger könnte beispielsweise auch gesondert markiert und/oder gekennzeichnet sein. Bei der Kennzeichnung kann es sich beispielsweise um thermische Kennzeichnungen und/oder elektromagnetische Kennzeichnungen, insbesondere NFC-Chips, RFID Chips und/oder Magnetstreifen, und/oder optische Kennzeichnungen, insbesondere Reflektoren, Strichcodekennzeichnungen und/oder QR-Code Kennzeichnungen, handeln.

Bei einer bevorzugten Weiterbildung wird, wenn das Steuersystem einen Ladungsträger erkannt hat, die relative Position und die Orientierung der jeweiligen Fördereinheit im Verhältnis zum erkannten Ladungsträger bestimmt. Dies ist insbesondere dann von Vorteil, wenn der Ladungsträger einen Lichtraum aufweist, in welchen die Fördereinheit einfahren muss. Anhand einer exakten Positions- und Orientierungsbestimmung kann der Einfahrtprozess der Fördereinheit optimiert werden. Beispielsweise kann der Einfahrtwinkel und die Einfahrtgeschwindigkeit der Fördereinheit an die Position und Orientierung der Fördereinheit zum Lichtraum des Ladungsträgers angepasst werden.

Ein Lichtraumtunnel wird dabei durch den Ladungsträger definiert und wird dadurch bestimmt, dass die lastaufnehmende Ebene zusammen mit der Stützstruktur einen Tunnel bildet. Beispielweise, wenn ein Ladungsträger als Palette ausgeführt ist, bilden sich zwei Lichtraumtunnel in Längs-Orientierung zu Palette.

Ein Einfahrprozess sei im Folgenden dadurch gekennzeichnet, dass die Fördereinrichtung im nicht gehobenen Zustand auf den Ladungsträger zufährt. Der Einfahrprozess umfasst auch, dass die Fördereinrichtung den Ladungsträger unterfährt, in dem die Fördereinheiten der Fördereinrichtung in die Lichtraumtunnel, welche, beispielsweise bei einer Palette, längs zum Ladungsträger angeordnet sind, einfahren. Der Einfahrtprozess endet, wenn die Fördereinrichtung die Zielposition unterhalb des gewünschten Ladungsträgers erreicht hat. Dabei kann mit dem gewünschten Ladungsträger der zuerst unterfahrenden Ladungsträger gemeint sein, aber auch jeder darauffolgende Ladungsträger, welcher sich hinter dem zuerst durchfahrenen Ladungsträger befindet.

Der Einfahrtprozess definiert dabei auf einer Fahrtrichtung zugewandten Seite, der sogenannten "Vorderen Seite" und einer Fahrtrichtung abgewandten Seite, der sogenannten "Hinteren Seite". Je nach Fahrtrichtung im Einfahrtprozess der Fördereinheit können diese abwechselnd definiert sein.

In einer beispielhaften Weiterentwicklung kann das Steuersystem die Position und Orientierung des Ladungsträgers im Raum bestimmen. Dies ist insbesondere dann der Fall, wenn das Steuersystem über hinreichend Informationen hinsichtlich der Eigenposition der jeweiligen Fördereinheit verfügt. Die Positions- und Orientierungsbestimmung des Ladungsträgers im Raum durch das Steuersystem einer Fördereinheit kann beispielsweise dann von Vorteil oder gar notwendig sein, wenn diese zu Beginn eines Einfahrtprozesses und/oder eines Förderprozesses noch nicht hinreichend bekannt war/ist.

Im Laufe des Einfahrtprozess wird der Detektionsbereich des Sensorsystems, welcher sich auf der Fahrtrichtung abgewandten Seite befindet, eingeschränkt. Diese Einschränkung erfolgt vor allem durch die Stützen des Ladungsträgers, welcher unterfahren wird. Die Stützen können dabei insbesondere die lastaufnehmenden Elemente des Ladungsträgers sein.

In weiterer vorteilhafter Ausführung kann das Sensorsystem an der hinteren Seite, solange die Sicht noch nicht eingeschränkt ist, Umgebungsparameter erfassen und diese zur Lokalisierung im Raum an das Steuersystem weiterleiten.

Bei einer solchen Ausführungsform kann das Sensorsystem mindestens einer der Fördereinheiten auf der der Fahrtrichtung abgewandten Seite Umgebungsparameter detektieren. Die Detektion der Umgebungsparameter kann insbesondere während des Einfahrtprozesses erfolgen. Die dabei detektierten Umgebungsparameter können an das Steuersystem weitergeleitet werden und dort zur Bestimmung der Position der jeweiligen Fördereinheit im Raum genutzt werden.

In praktischen Anwendungsfällen kann es vorkommen, dass zwei oder mehrere Ladungsträger hintereinander platziert sind oder dass der Ladungsträger vor einer Wand platziert ist. Dabei können die Ladungsträger entweder direkt und somit in Kontakt stehend, oder auch mit einem minimalen Abstand voneinander stehen.

In einer weiteren vorteilhaften Ausführung ermöglicht die Erfindung im Stadium, in welchem die Detektionsebene der Fördereinheit den Ladungsträger im nicht-gehobenen Zustand schneidet und sich somit im Einfahrtprozess befindet, die Detektion von hinter des ersten Ladungsträgers bestehenden Elementen. Insbesondere kann das Sensorsystem, nachdem die jeweilige Fördereinheit anfängt den ersten Ladungsträger zu unterfahren, durch das Erfassen von Umgebungsparametern möglicherweise einen folgenden Ladungsträger erfassen. Dazu wird durch das Steuerungssystem geprüft, ob ein weiterer - sich anschließender - Lichtraumtunnel auf den aktuell durchfahrenden Lichtraumtunnel anschließt. In besonders vorteilhafter Ausführung kann ebenfalls unterschieden werden, ob sich hinter dem bereits unterfahrenden Ladungsträger weitere Ladungsträger befinden oder gegebenenfalls ein Hindernis in Form von einer Wand folgt.

Bei einer vorteilhaften Weiterentwicklung weist eine der Fördereinheiten ein Sensorsystem auf, welches während des Einfahrtprozesses Umgebungsparameter in Fahrtrichtung detektiert. Die jeweils andere Fördereinheit der Fördereinrichtung weist bevorzugt ein Sensorsystem auf, welches Umgebungsparameter entgegen der Fahrtrichtung detektiert. Eine solche Weiterentwicklung ermöglicht, dass während des Einfahrtprozesses Umgebungsparameter in beide Richtungen zeitgleich detektiert werden können. Vorteilhafterweise tauschen sich die Steuereinheiten, der zu einer Fördereinrichtung synchronisierten Fördereinheiten, die jeweils detektierten Umgebungsparameter untereinander aus. Die Datenübertragung zwischen den einzelnen Fördereinheiten kann beispielsweise drahtlos erfolgen. Eine derartige Ausführungsform hat den Vorteil, dass die Fördereinrichtung besonders kostensparend ausgebildet sein kann. Insbesondere die Sensorsysteme der Fördereinheiten können dann kostensparend ausgebildet sein, da sie jeweils nur noch einen kleineren Detektionsbereich abdecken müssen.

In einer vorteilhaften Ausführung ist das Sensorsystem derart ausgebildet, dass neben weiteren Erfassungsdaten vor allem der Abstand zu einem Objekt, als auch ein Reflexionswert erfasst werden kann.

Bei einer beispielhaften Weiterbildung kann, wenn die Fördereinheit den Ladungsträger bereits unterfahren hat, eine Detektionsebene des Sensorsystems sich durch einen Sichtbereich, welcher durch einen quer durch den Ladungsträger verlaufenden Lichtraumtunnel gebildet wird, hindurch erstrecken. Die dabei detektierten Umgebungsparameter können vom Steuersystem dazu genutzt werden, um Objekte außerhalb des Ladungsträgers zu erkennen. Somit kann in dieser vorteilhaften Ausführung insbesondere festgestellt werden, ob eine seitliche Weiterfahrt möglich oder ausgeschlossen ist.

Weitere Merkmale und Vorteile der Erfindung ergeben sich aus der nachfolgenden Beschreibung von Ausführungsbeispielen und anhand der Zeichnungen. Die Zeichnungen zeigen:
- Figur 1: eine perspektivische Ansicht eines ersten Ausführungsbeispiels einer Fördereinrichtung, welche vor der Einfahrt in einen Ladungsträger dargestellt ist;
- Figur 2: eine schematische Draufsicht auf eine Fördereinheit der Fördereinrichtung des ersten Ausführungsbeispiels;
- Figur 3: eine weitere Ansicht des Ausführungsbeispiels aus Figur 2;
- Figur 4: eine schematische Seitenansicht der Fördereinheit im nicht-gehobenen Zustand mit einer Detektionsebene;
- Figur 5: eine schematische Seitenansicht der Fördereinheit im gehobenen Zustand mit einer Detektionsebene;
- Figur 6: eine schematische Seitenansicht der Fördereinheit unterhalb eines Ladungsträgers, welcher sich im nicht-gehobenen Zustand befindet;
- Figur 7: eine schematische Seitenansicht der Fördereinheit unterhalb eines Ladungsträgers, welcher sich im gehobenen Zustand befindet;
- Figur 8: eine schematische Draufsicht auf das erste Ausführungsbeispiel der Fördereinrichtung mit einem Ladungsträger;
- Figur 9: eine weitere schematische Draufsicht auf die Fördereinheit;
- Figur 10: eine schematische Draufsicht auf das erste Ausführungsbeispiel der Fördereinrichtung, welche sich im Einfahrtprozess befindet;
- Figur 11: eine weitere schematische Draufsicht auf das erste Ausführungsbeispiel der Fördereinrichtung, welche sich im Einfahrtprozess befindet und bereits den Ladungsträger zum Teil unterfahren hat;
- Figur 12: eine schematische Draufsicht auf das erste Ausführungsbeispiel der Fördereinrichtung, welche einen Ladungsträger in der Draufsicht nach rechts hin transportiert;
- Figur 13: eine schematische Draufsicht auf das erste Ausführungsbeispiel der Fördereinrichtung, in welchem eine Fördereinheit eine Bremsung aufgrund einer detektierten Kollision ausgelöst hat;
- Figur 14: eine weitere schematische Draufsicht auf das erste Ausführungsbeispiel der Fördereinrichtung mit eingezeichneten Bahnkurven der Fördereinheiten;
- Figur 15: eine der Fig. 14 entsprechende, weitere Draufsicht auf das erste Ausführungsbeispiel der Fördereinrichtung mit eingezeichneten Erfassungsbereichen des Sensorsystems;
- Figur 16: eine der Fig. 15 entsprechende, weitere Draufsicht auf das erste Ausführungsbeispiel der Fördereinrichtung mit alternativer Bahnkurve;
- Figur 17: eine weitere schematische Draufsicht auf das erste Ausführungsbeispiel der Fördereinrichtung, welche sich senkrecht zur Längsachse der Fördereinheiten bewegen möchte;
- Figur 18: eine weitere schematische Draufsicht auf das erste Ausführungsbeispiel der Fördereinrichtung, in welcher sich die Fördereinrichtung, nach einem Förderstart senkrecht zur Längsachse der Fördereinheiten, dreht;
- Figur 19: eine schematische Draufsicht auf einen Wartebereich eines Fördersystems, welches mehrere Fördereinrichtungen des ersten Ausführungsbeispiels umfasst;
- Figur 20: eine schematische Draufsicht auf einen Lagerbereich, wobei eine Fördereinheit auf dem Rückweg in den Wartebereich ist;
- Figur 21: eine der Figur20 entsprechende Ansicht auf den Lagerbereich, wobei ein neuer Förderauftrag zur Wahl von zwei Fördereinheiten führt und die Bahnkurven der Fördereinheiten berechnet werden;
- Figur 22: eine der Figur 20 entsprechende Ansicht auf den Lagerbereich, wobei ein neuer Förderauftrag von zwei Fördereinheiten ausgeführt werden soll;
- Figur 23: eine der Figur 20 entsprechende Ansicht auf den Lagerbereich, wobei zwei neue Förderaufträge sich auf zwei hintereinander befindlichen Ladungsträgern bezieht und dementsprechend gemeinsam ausgeführt werden können;
- Figur 24: eine schematische Draufsicht auf ein zweites Ausführungsbeispiel der Fördereinrichtung.

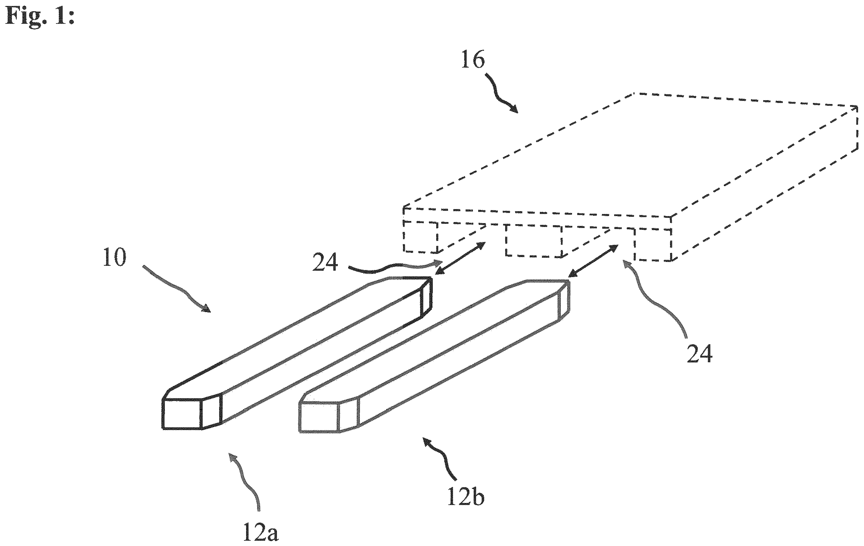

Fig. 1 zeigt eine Fördereinrichtung (10), bestehend aus zwei unabhängigen Fördereinheiten (12). Beide Fördereinheiten (12) fahren unter den Freilichtraum (24) des Ladungsträgers (16), welcher in diesem Fall in Form einer Palette dargestellt ist. Jede Fördereinheit (12) der Fördereinrichtung (10) kann den Ladungsträger (16) durch eine Hub-/Senkeinrichtung anheben und den Ladungsträger (16) im angehobenen Zustand zu einem Zielort verfahren.

Die nicht dargestellte Hub-/Senkeinheit ist für das Anheben und Absenken eines Tragelementes vorgesehen und kann unabhängig vom Antriebssystem der jeweiligen Fördereinheit (12) arbeiten. Es ist denkbar, dass das Tragelement im Querschnitt als T- Profil oder L-Profil ausgeprägt ist.

Das nicht dargestellte Antriebssystem besteht aus mindestens einem Antriebsmodul, welches mindestens eine Bodenrolle der jeweiligen Fördereinheit frei und unabhängig antreibt. Das Antriebssystem und/oder jedes Antriebsmodul kann vorteilhafterweise auch eine Lenkeinheit umfassen, mittels welcher eine Lenkbewegung der jeweiligen Fördereinheit gesteuert werden kann.

Mindestens zwei Fördereinheiten bilden eine Fördereinrichtung, wobei sich jeweils zwei beliebige Fördereinheiten zu einer Fördereinrichtung synchronisieren können.

Jede Fördereinheit (12) kann frei und unabhängig von der jeweils anderen Fördereinheit (12) verfahren. Somit kann jede Fördereinheit (12) sich eigenständig bewegen und bei einem Förderauftrag sich an einer beliebigen Stelle mit einer beliebigen anderen Fördereinheit eines Fördersystems zu einer Fördereinrichtung (10) synchronisieren.

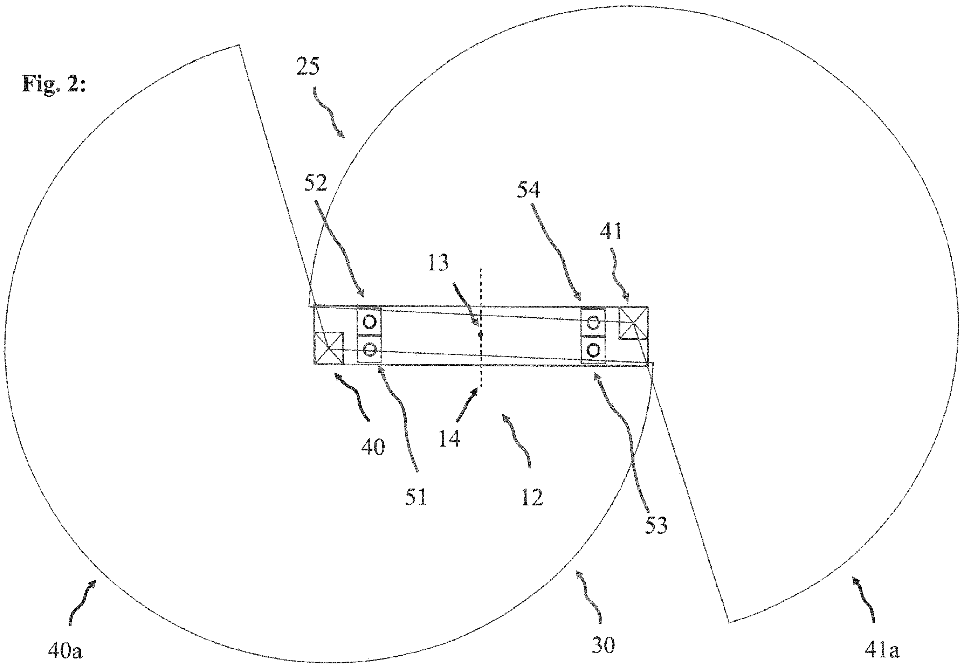

Fig. 2 zeigt die Fördereinheit (12) schematisch von oben. Eine Fördereinheit (12) besitzt im dargestellten Ausführungsbeispiel mindestens zwei Sensoreinheiten (40, 41), welche gemeinsam ein Sensorsystem (25) bilden. Die jeweiligen Detektionsbereiche der Sensoreinheiten (40, 41) sind in Fig. 2 dargestellt und durch die Bereiche (40a) und (41a) gekennzeichnet. Die überlagerten Bereiche werden von beiden Sensoreinheiten (40, 41) erfasst. Des Weiteren ist das Antriebssystem (30) eingezeichnet, welches im gezeigten Ausführungsbeispiel aus vier einzelnen Antriebseinheiten (51, 52, 53, 54) besteht. In bevorzugter Bauweise umfasst jede dieser Antriebseinheiten jeweils eine Bodenrolle, welche um eine Hochachse frei drehbar ist. Bei der Hochachse handelt es sich bevorzugt um die vertikale Mittelachse der jeweiligen Antriebseinheit (51, 52, 53, 54).

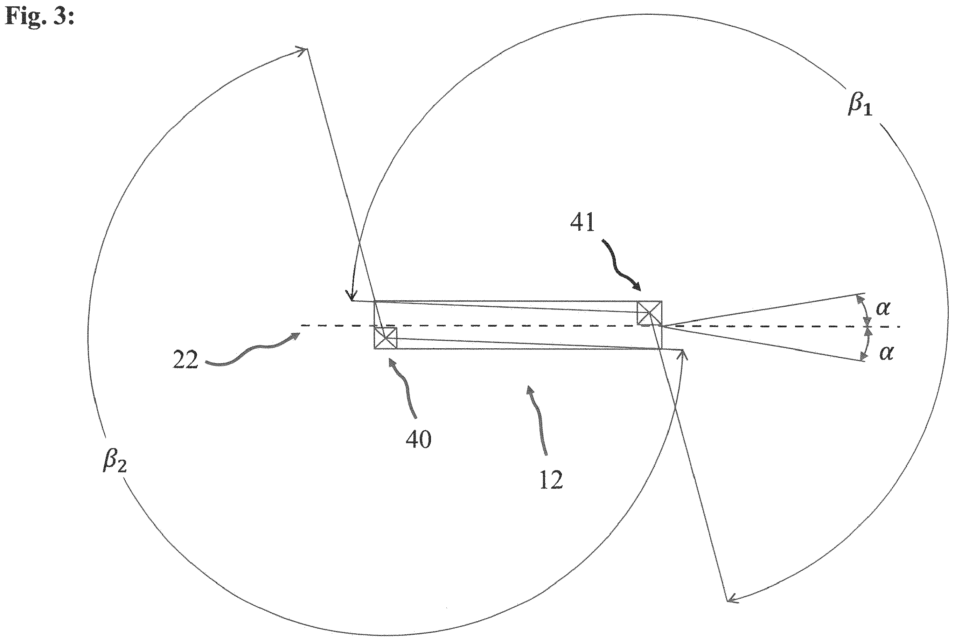

Fig. 3 zeigt die Sensoreinheiten (40, 41) des Sensorsystems (25) innerhalb der Fördereinheit (10), wobei in diesem Fall auch die Längsachse (22) der Fördereinheit (10) dargestellt ist. Der Mindestdetektionswinkel (α) ist dabei ausgehend von der Längsachse (22) eingezeichnet. Jener Mindestdetektionswinkel (α) ist bevorzugt größer 5°. Ebenso ist der Raumwinkelerfassungsbereich (β) jeder Sensoreinheit (40, 41) eingezeichnet, welcher im dargestellten Ausführungsbeispiel ca. 260° beträgt. Es ist denkbar, dass die Sensoreinheiten (40, 41) als optische Sensoreinheiten (40, 41), insbesondere als Laserscanner (40, 41) ausgebildet sind.

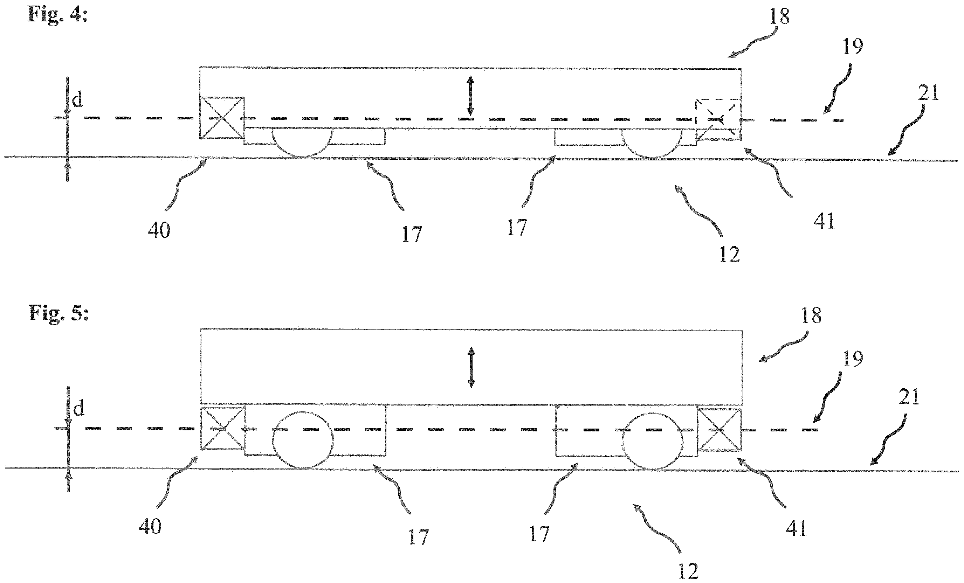

Fig. 4 zeigt die Fördereinheit (12) in der Seitenansicht im nicht-gehobenen Zustand. Der Abstand zwischen der Detektionsebene (d), die im dargestellten Ausführungsbeispiel parallel zum Boden (21) verläuft, sollte weniger als 20 cm betragen. Das Trägerelement (18) kann, durch die nicht dargestellte Hub-/Senkeinheit vertikal zum Boden (21) verfahren werden. Beispielhaft sind in Fig. 4 außerdem zwei Antriebseinheiten (17) eines Antriebssystems (30) eingezeichnet.

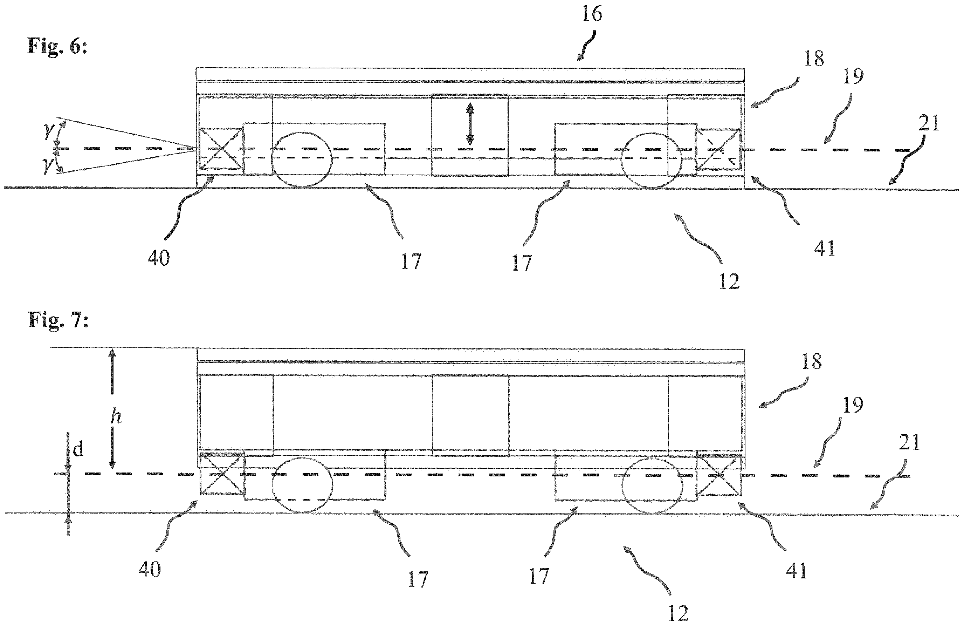

Fig. 5 zeigt die Fördereinheit (12) in der Seitenansicht im gehobenen Zustand. Im gezeigten Ausführungsbeispiel befindet sich das Tragelement (18) oberhalb der Detektionsebene (19). Fig. 6 zeigt anhand einer schematischen Seitenansicht die Fördereinheit (12), wobei diese sich im nicht-gehobenen Zustand befindet. Die Detektionslinie (19) der Sensoreinheiten (40, 41) kann, bezogen auf eine horizontale Ebene, um den Winkel (γ) bis 5° angewinkelt sein. Im dargestellten Ausführungsbeispiel beträgt der Winkel 0°. Die Detektionsebene (19) ist somit parallel zum Boden (21). In einer vorteilhaften Ausführung schneidet die Detektionslinie (19) den Ladungsträger (16) im nicht-gehobenen Zustand.

Fig. 7 zeigt eine schematische Seitenansicht die Fördereinheit (12) im gehobenen Zustand. In diesem Zustand, gegenteilig zu Figur 6, schneidet die Detektionsebene (19) den Ladungsträger nicht mehr. Die Distanz (h), zwischen der Oberkante des Ladungsträgers (16) und der Detektionsebene (19), sollte größer als 10 cm sein. Es ist dazu denkbar, dass die Sensoreinheiten (40, 41) bei einer vorteilhaften Ausführung an vertikal unbewegten Komponenten, beispielsweise dem Fahrwerk, befestigt sind.

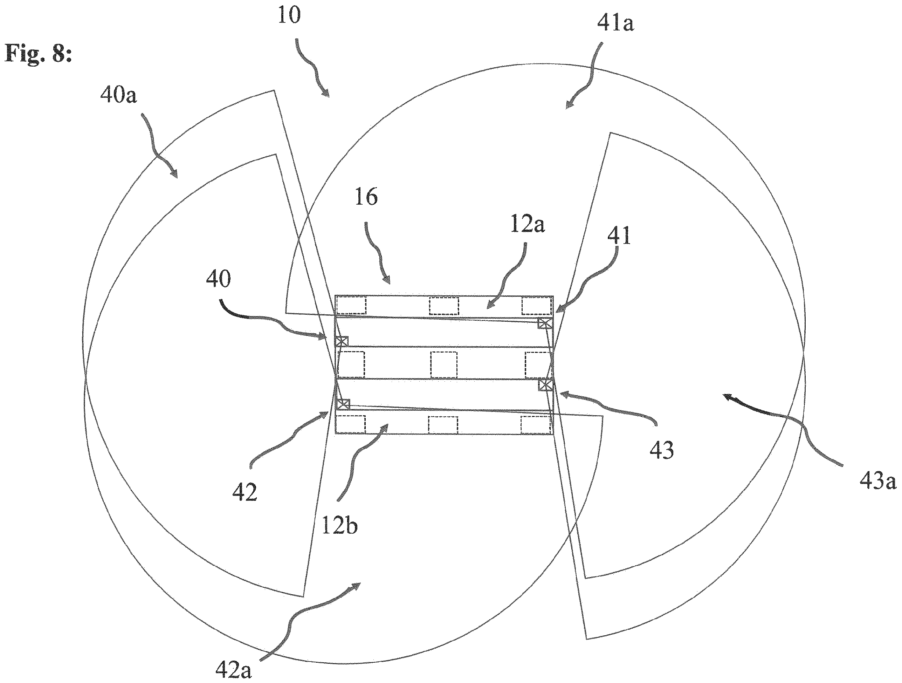

Fig. 8 zeigt eine Draufsicht auf eine Fördereinrichtung (10) mit aufgenommen Ladungsträger (16). Im dargestellten Ausführungsbeispiel ist die Fördereinrichtung (10) mit zwei Sensorsystemen (25), nämlich pro Fördereinheit (12) ein Sensorsystem (25), mit jeweils zwei Sensoreinheiten (40,41 und 42, 43) versehen. Diese Sensoreinheiten erfassen das Umfeld in den eingezeichneten Erfassungsbereichen (40a-43a). Durch die Kombination der einzelnen Erfassungsbereiche (40a-43a) ist es möglich das Umfeld in seiner Gesamtheit, also über einem Gesamterfassungsbereich von 360°, zu erfassen.

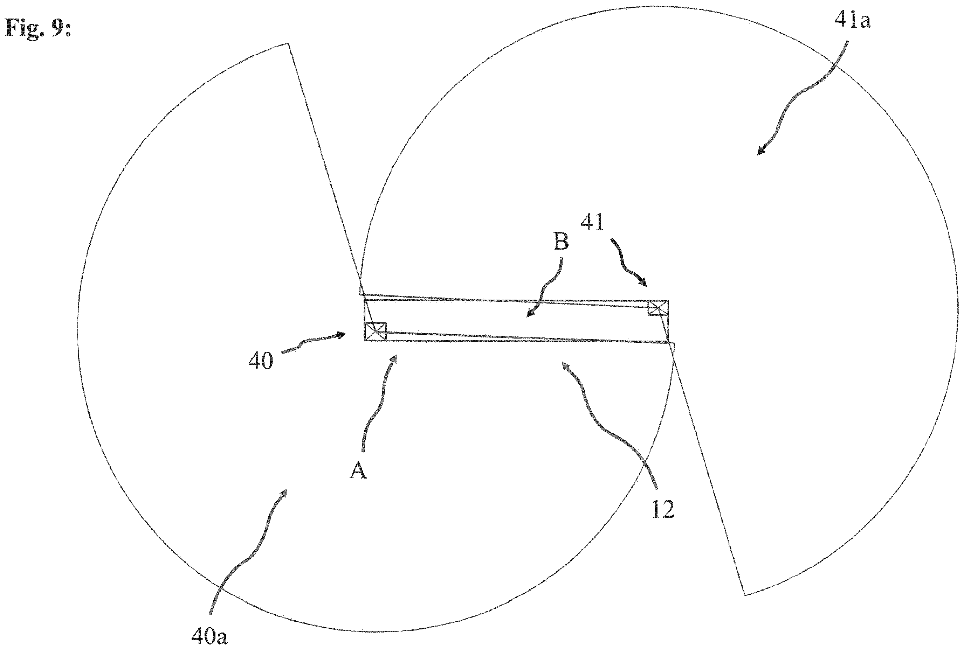

Fig. 9 zeigt eine Draufsicht auf eine Fördereinheit (12), welche zwei Sensoreinheiten (40, 41) aufweist. Dabei ist die Grundfläche (A), eine vertikal projizierte Fläche des Freilichtraums des Ladungsträgers auf den Boden, eingezeichnet. In der dargestellten Ausführung entspricht die Grundfläche der Fördereinheit (12) nahezu der Grundfläche (A) des Freilichtraums. Zudem ist die nicht-detektierte Fläche (B) eingezeichnet. Diese Fläche (B) ist von Erfassungsbereichen (40a) und (41a) eingeschlossen und in der Grundfläche A enthalten. In der beispielhaften Ausführung entspricht die Fläche (B) der Form eines Parallelogramms.

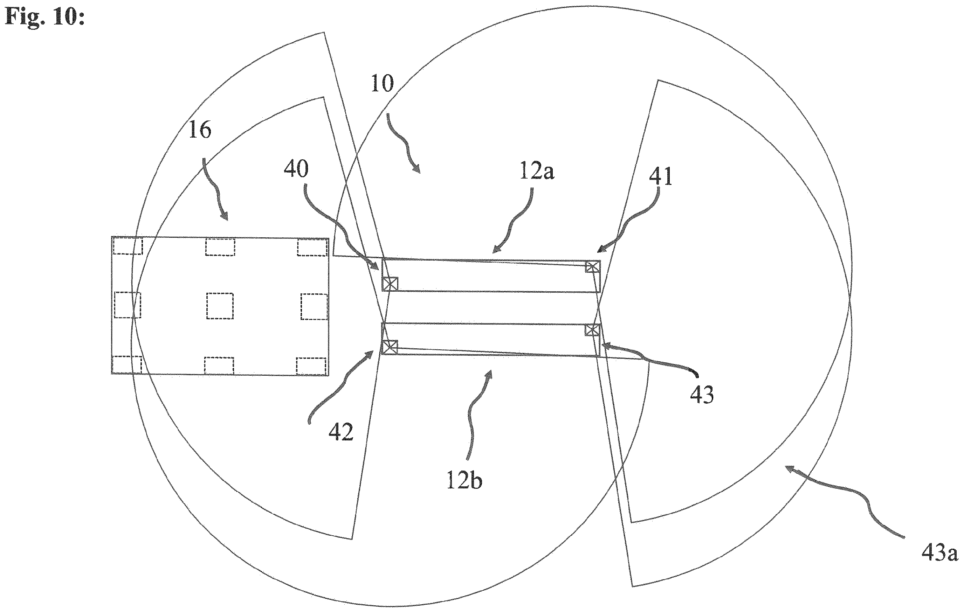

Fig. 10 zeigt eine Draufsicht auf eine Fördereinrichtung (10), welche aus zwei unabhängigen Fördereinheiten (12a, 12b) besteht und sich im Einfahrtprozess unterhalb des Ladungsträgers (16) befindet. Im Einfahrtprozess wird dabei zwischen einer der Fahrtrichtung zugewandten Seite und einer der Fahrtrichtung abgewandten Seite unterschieden. Im gezeigten Ausführungsbeispiel sind die Sensoreinheiten (40, 42) der sogenannten vorderen - der Fahrtrichtung zugewandten - Seite zugeordnet, die Sensoreinheiten (41, 43) der hinteren - der Fahrtrichtung abgewandten - Seite zugeordnet. Während des Einfahrtprozesses können die Sensoreinheiten (40, 42) jeweils einzeln, als auch kombiniert miteinander, den Ladungsträger (16) erfassen. In einer besonders vorteilhafter Ausführungsformen können Steuersysteme der Fördereinheiten (12) und/oder die Sensoreinheiten (40, 41, 42, 43) die Position und die Orientierung der jeweiligen Fördereinheit (12) relativ zum Ladungsträger (16) aus den erfassten Umgebungsparametern berechnen. In einer vorteilhaften Weiterbildung können die Sensoreinheiten (41, 43) auf der Fahrtrichtung abgewandten Seite zeitgleich zu den Sensoreinheiten (40, 42) charakteristische Merkmale der Umgebung erfassen und ermöglichen somit die Lokalisierung im Raum. Auf Basis aller erfassten Umgebungsparameter kann bestenfalls die Position der Fördereinheit im Raum, als auch ihre relative Position und Orientierung zum Ladungsträger zeitgleich ermittelt werden.

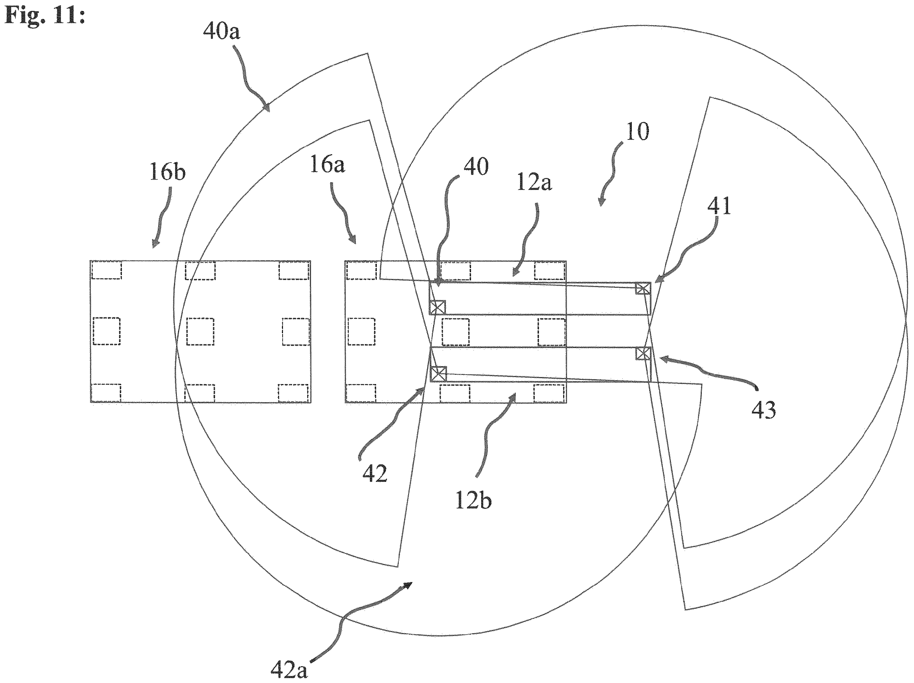

Fig. 11 zeigt eine Draufsicht auf eine Fördereinrichtung (10) der vorangegangenen Ausführungsbeispiele, welche aus zwei unabhängigen Fördereinheiten (12a, 12b) besteht und sich im Einfahrtprozess befindet, wobei sich ein Teil der Fördereinrichtung (10) schon unterhalb eines ersten Ladungsträgers (16a) geschoben hat. Im dargestellten Szenario sind zwei Ladungsträger (16b) hintereinander, mit einem gewissen Versatz, angeordnet. Sobald die Fördereinrichtung (10) beginnt den ersten Ladungsträger (16a) zu unterfahren, können die durch die Sensoreinheiten (40, 42) jeweils erfassten Umgebungsparameter derart ausgewertet werden, dass ermittelt werden kann, was auf den bereits unterfahrenen Ladungsträger (16a) folgt. In vorteilhaften Weiterbildungen kann auf Basis der durch die Sensoreinheiten (40, 42) detektierten Umgebungsparameter unterschieden werden, ob ein oder gegebenenfalls mehrere weitere Ladungsträger (16b) folgen. Im Falle des in Fig. 11 dargestellten Szenarios, würde der zweite Ladungsträger (16b) erkannt werden. In anderen Szenarien ist es aber denkbar, dass auf Basis der erfassten Umgebungsparameter auch festgestellt werden kann, wenn kein weiterer Ladungsträger folgt und/oder eine Wand bzw. ein Hindernis folgt und somit eine Weiterfahrt, wenn überhaupt, nur eingeschränkt möglich ist. Im Falle der Erkennung eines weiteren Ladungsträgers (16b) kann insbesondere erkannt werden, in welchem Abstand und in welcher Orientierung sich der folgenden Ladungsträger (16b) im Verhältnis zur eigenen Position und Orientierung der Fördereinrichtung (10) befindet.

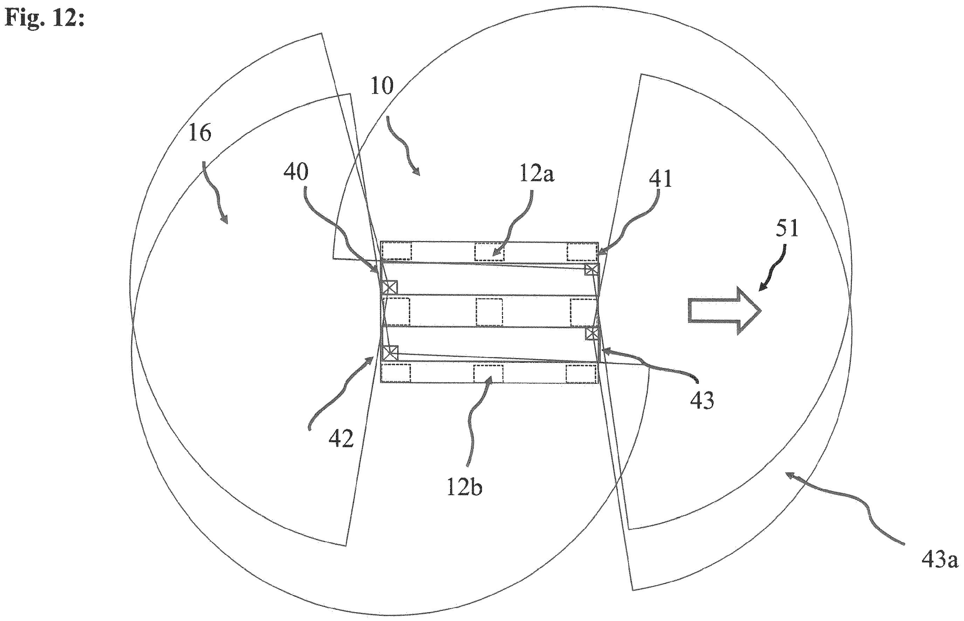

Fig. 12 zeigt eine Draufsicht auf eine Fördereinrichtung (10), welche aus zwei unabhängigen Fördereinheiten (12a, 12b) besteht und sich im Transportprozess unterhalb des Ladungsträgers (16) befindet. Die Detektionsbereiche der Sensoreinheiten (40, 41 ,42 ,43) sind derart ausgerichtet, dass sie knapp an der jeweiligen anderen Fördereinheit vorbeilaufen. Im vorliegenden Ausführungsbeispiel zeigt der Pfeil (51), welcher die Fahrtrichtung symbolisiert, nach rechts. Somit sind die Sensoreinheiten (40, 42) der Fahrtrichtung abgewandten Seite zugeordnet und sorgen für die gegenseitige Absicherung.

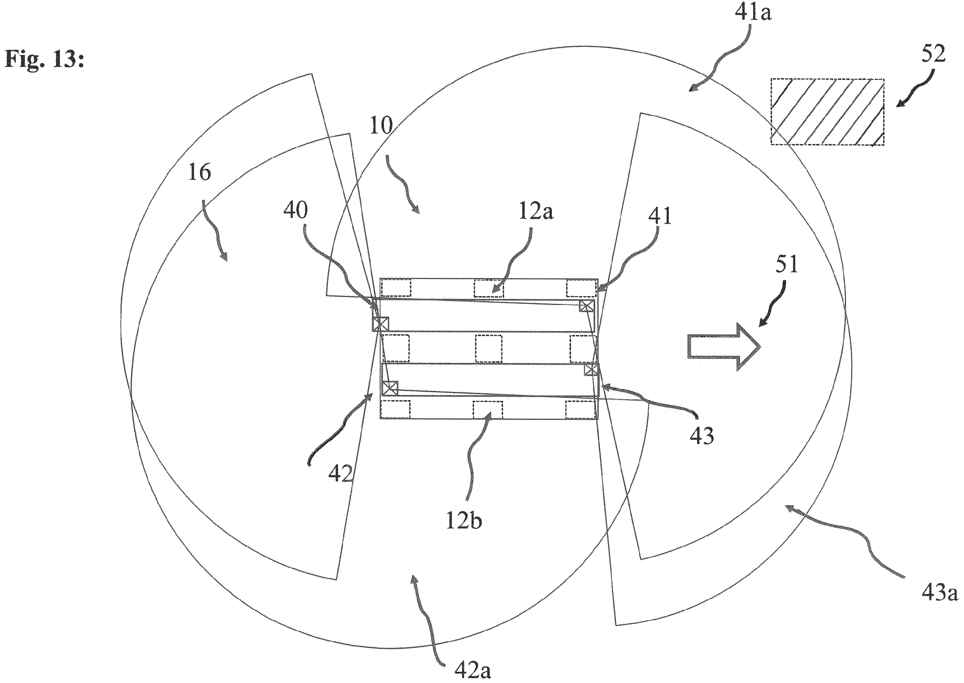

Fig. 13 zeigt eine Draufsicht auf eine Fördereinrichtung (10), wie sie bereits in Fig. 12 dargestellt ist. Die Fördereinrichtung (10) besteht aus zwei unabhängigen Fördereinheiten (12a, 12b) und befindet sich im Transportprozesses unterhalb des Ladungsträgers (16). Jedoch wurde in diesem Fall eine anstehende Kollision mit Hindernis (52) durch eine Detektionsbereichsverletzung (41a) erkannt und eine Notbremsung ausgelöst. Das Hindernis (52) soll schematisch eine Person darstellen, welche auf Kollisionsweg mit dem Fahrweg der Fördereinrichtung (16) liegt. Nach erfolgter Bremsung der ersten Fördereinheit (12a), detektiert nun die hintere Sensoreinheit (42) der zweiten Fördereinheit (12b) eine Kollision durch eine Verletzung des Detektionsbereichs (42a). Die Verletzung des Detektionsbereichs (42a) wird durch die stehende erste Fördereinheit (12a), welche sich nunmehr in Detektionsbereichs (42a) der Sensoreinheit (42) der zweiten Fördereinheit (12b) befindet, ausgelöst. Die zweite Fördereinheit (12b) löst dementsprechend ebenfalls eine Bremsung aus und kommt zum Stehen. Das Gesamtsystem wurde aufgrund einer detektierten Kollisionsgefahr zum Stillstand gebracht.

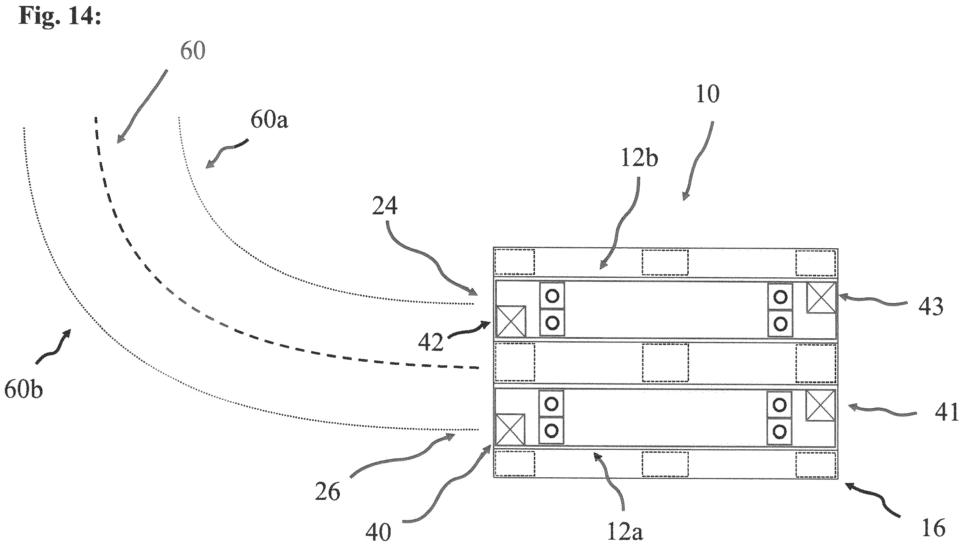

Fig. 14 zeigt die Fördereinrichtung (10) schematisch von oben. Die Fördereinrichtung (10) besteht aus zwei Fördereinheiten (12), die sich jeweils in den Freilichträumen (24, 26) unterhalb des Ladungsträgers (16) befinden. Bei einem gegeben Förderauftrag wird den beiden Fördereinheiten (12) jeweils mindestens der Zielort des Ladungsträgers (16) und die Relativposition des Ladungsträgers (16) im Raum drahtlos mitgeteilt. Anhand ihrer jeweiligen Positionen innerhalb des Ladungsträgers (16) kann jede Fördereinheit (12) die Bahnkurve (60) des Ladungsträgers (16), sowie ihre jeweilige eigene Bahnkurve (60a, 60b) berechnen. In jedem Fall ist die Bahnkurve des Ladungsträgers (16) entscheidend und kann als Master-Bahnkurve angesehen werden. Des Weiteren sind die jeweiligen Sensoreinheiten (40, 41) und (42, 43) von den jeweiligen Fördereinheiten (12) dargestellt.

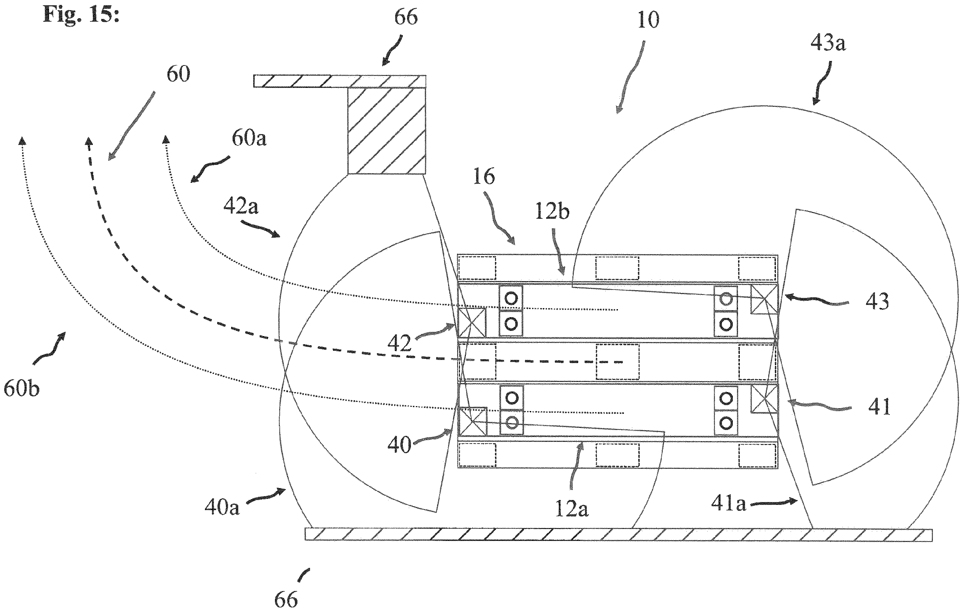

Fig. 15 entspricht einer perspektivischen Draufsicht auf die Fördereinrichtung (10), wie sie auch in Fig. 14 dargestellt ist. In dieser Darstellung ist ebenfalls die Fördereinrichtung (10) und ein Ladungsträger (16) zu sehen, welche entlang der Bahnkurve (60) verfahren möchte. Die Fördereinheiten (12a, 12b) sind mit den jeweiligen Sensoreinheiten (40, 41) und (42, 43) dargestellt, welche jeweils einen Erfassungsbereich (40a, 41a, 42a, 43a) haben. Anhand umliegender Objekte (66) kann die eigene Lage genau erfasst werden, und somit zur Positionskorrektur der jeweiligen Bahnkurve (60a, 60b) relativ zur Master-Bahnkurve (60) verwendet werden.

Eine andere vorteilhafte Ausführung wäre gegebenen, wenn die Fördereinheit (12a, 12b) sich unterhalb des Ladungsträgers (16) zusätzlich, neben der Gewichtskraft des Ladungsträgers (16) und der Ladung, kraftschlüssig verbinden und somit auch bei geringer Last auf dem Ladungsträger (16) eine starre Verbindung bewirken. Eine Relativbewegung zwischen der Fördereinrichtung (10) und dem Ladungsträger (16) wäre somit nahezu ausgeschlossen. Insbesondere könnte die kraftschlüssige Verbindung durch ein Festklemmen unterhalb des Ladungsträgers realisiert werden.

In einer besonders vorteilhaften Ausführung des Fördersystems und deren Steuerungsverfahren werden beide Methoden, zu einem das Festklemmen unterhalb des Ladungsträgers (16) zur Minimierung der Relativbewegung, zum anderen die Erfassung von Objekten (66) im Umfeld zur Ist-Positionierung, angewandt.

Bei besonders vorteilhafter Ausführung des Antriebsystems (30) sind die Bodenrollen der Fördereinheiten (12) frei drehbar. Gemäß dem bisher vorgestellten Ausführungsbeispiel der Fördereinrichtung (10) sind daher insgesamt acht Antriebseinheiten, jeweils vier Antriebseinheiten in jeder Fördereinheit (12), vorhanden.

Das Ausführungsbeispiel der Fördereinrichtung (10), kombiniert mit dem Steuerungsverfahren nach dem vierten Aspekt, ermöglicht komplexe, nicht-gradlinige Bahnkurven.

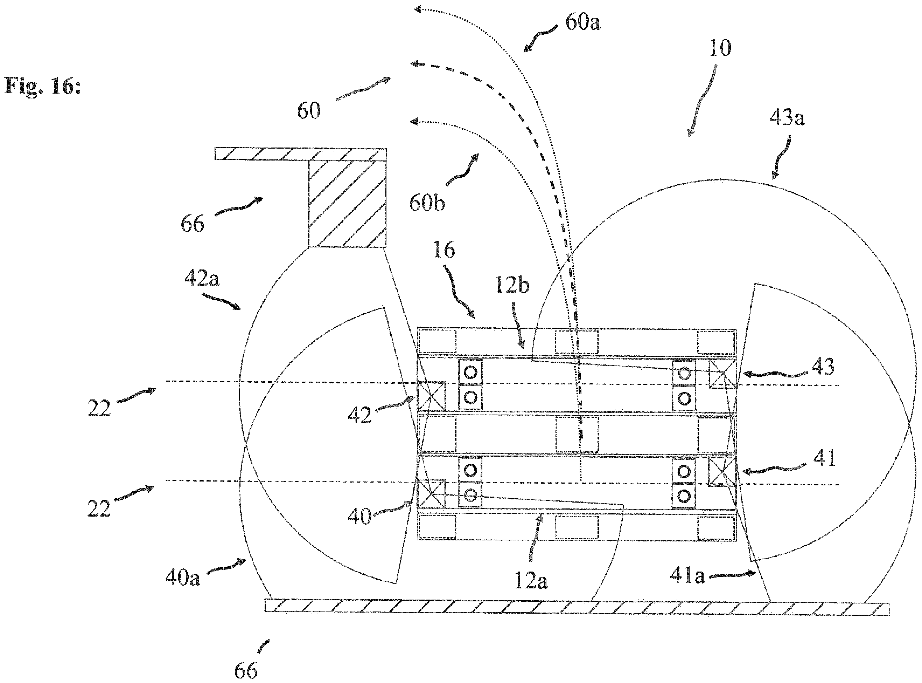

Fig. 16 entspricht einer perspektivischen Draufsicht von oben auf die Fördereinrichtung (10), wie sie auch in Fig. 15 dargestellt ist. In dieser Darstellung ist ebenfalls die Längsachse (22) jeder Fördereinheit (12a, 12b) eingezeichnet. In dieser Situation hat das Steuerungsverfahren, beispielsweise aufgrund anderer Bodenrollenausrichtungen, insbesondere jener, in welchem alle Bodenrollen senkrecht zu Längsachse (22) ausgerichtet sind, eine andere Bahnkurve (60) zum Fördern des Ladungsträgers (12) vorgegeben.

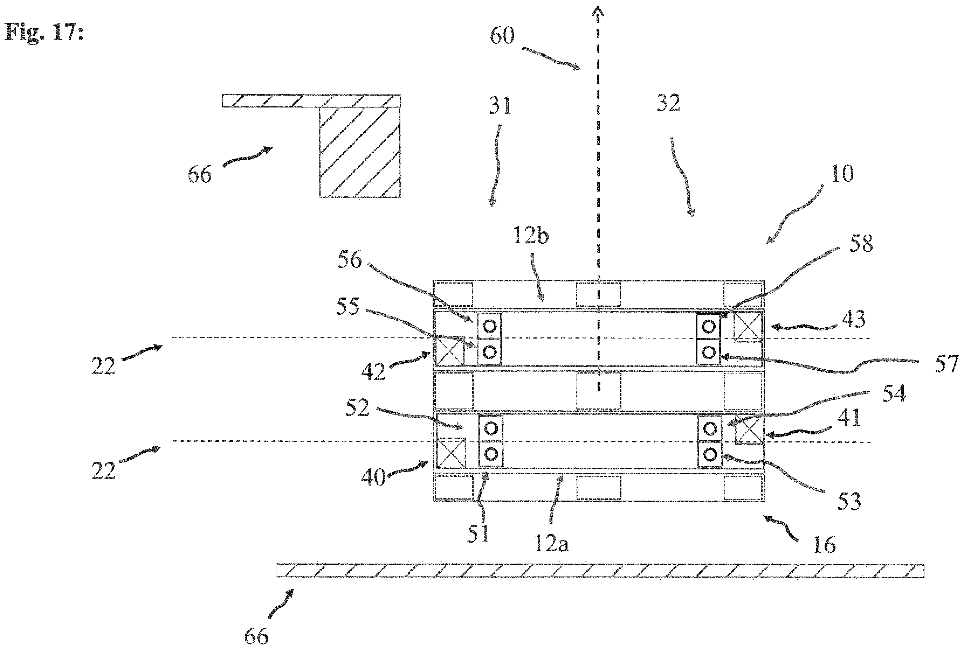

Fig. 17 zeigt eine schematische Draufsicht auf eine Fördereinrichtung (10), welche sich senkrecht zu der Längsachse (22) bewegen möchte. Da jedoch ein dauerhaftes Fördern in diese Fahrtrichtung aufgrund geringerer Kippstabilität nicht erwünscht ist, muss eine Drehung eingeleitet werden. In bekannten Steuerungsverfahren wird dies durch eine Drehung auf der Stelle gelöst. Es sind die Antriebseinheiten (51-54) der ersten Fördereinheit (12), sowie die Antriebseinheiten (55-58) der zweiten Fördereinheit (12) eingezeichnet. Zum tieferen Verständnis sind in diesem Fall die Antriebseinheiten bezogen auf die Fördereinheit (12) gruppiert. Die Antriebseinheiten (51, 52, 55, 56) bilden die, in dieser dargestellten, beispielhaften Situation, linke Antriebseite (31) der Fördereinrichtung (10), wohingegen die Antriebseinheiten (53, 54, 57, 58) die rechte Antriebsseite (32) der Fördereinrichtung (10) bilden.

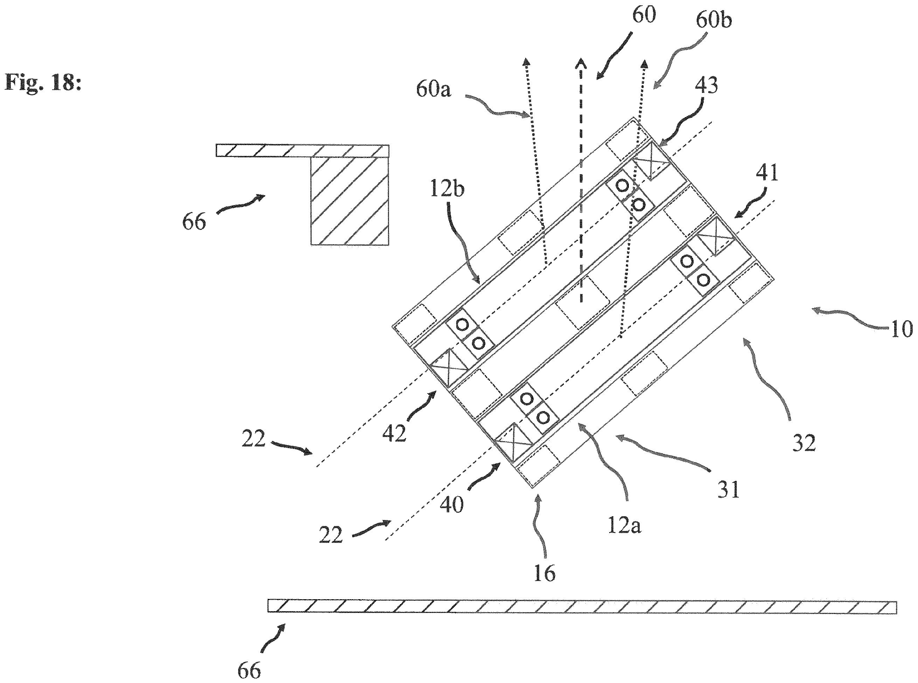

Fig. 18 zeigt eine schematische Draufsicht auf eine Fördereinrichtung (10), welche sich nun, ausgehend von der in Fig. 17 dargestellten Situation, in Bewegung befindet. Die Drehung der Fördereinheit (12) wurde derart eingeleitet, dass alle Antriebseinheiten der rechten Antriebsseite (32) eine erhöhte Raddrehzahl aufweisen, verglichen zu den Antriebseinheiten der linken Antriebsseite (31). Aufgrund der beispielhaften Drehung der Fördereinrichtung (10) lassen sich die individuellen Bahnkurven (60a) und (60b) der einzelnen Fördereinheiten (12) einzeichnen. Dies entspricht einer Überlagerung von zwei Bewegungen, namentlich einer translatorischen Bewegung und einer rotatorischen Bewegung.

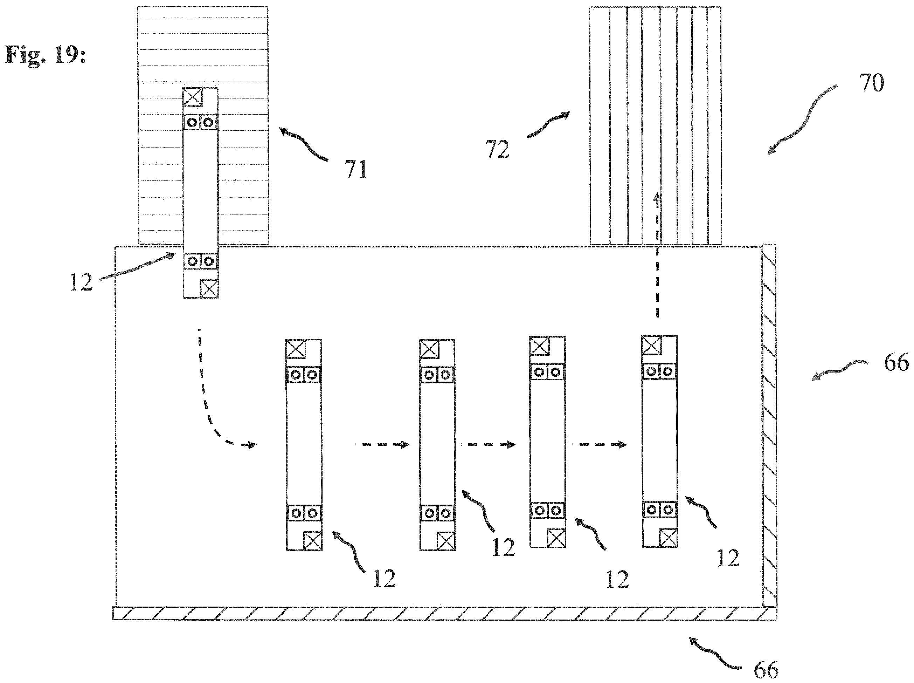

Fig. 19 zeigt eine schematische Draufsicht auf eine Wartezone (70). Die Wartezone (70) hat mindestens einen Stellplatz für eine Fördereinheit (12), bei vorteilhafter Ausführung für mehrere Fördereinheiten (12). Die Wartezone (70) ist bestenfalls umrandet von Objekten (66), die die Wartezone begrenzen. Beispielsweise könnten die Objekte (66) in Form von Barrieren ausgeprägt sein. Alternativ kann eine Wartezone (70) auch ohne jegliche Umrandung mittels Objekten (66), oder nur mit Teilumrandungen ausgebildet sein. Die Objekte (66) sind zur Begrenzung der Wartezone (70) folglich nicht zwingend erforderlich. Des Weiteren besitzt eine Wartezone (70) einen Einfahrtsbereich (71), quer schraffiert, und einen Ausfahrtsbereich (72), längs schraffiert, über welchen die Fördereinheiten (12) in die Wartezone (70) eintreten oder die Wartezone (70) verlassen können. Ferner ist denkbar, dass die Fördereinheiten (12) innerhalb der Wartezone aufgeladen werden.

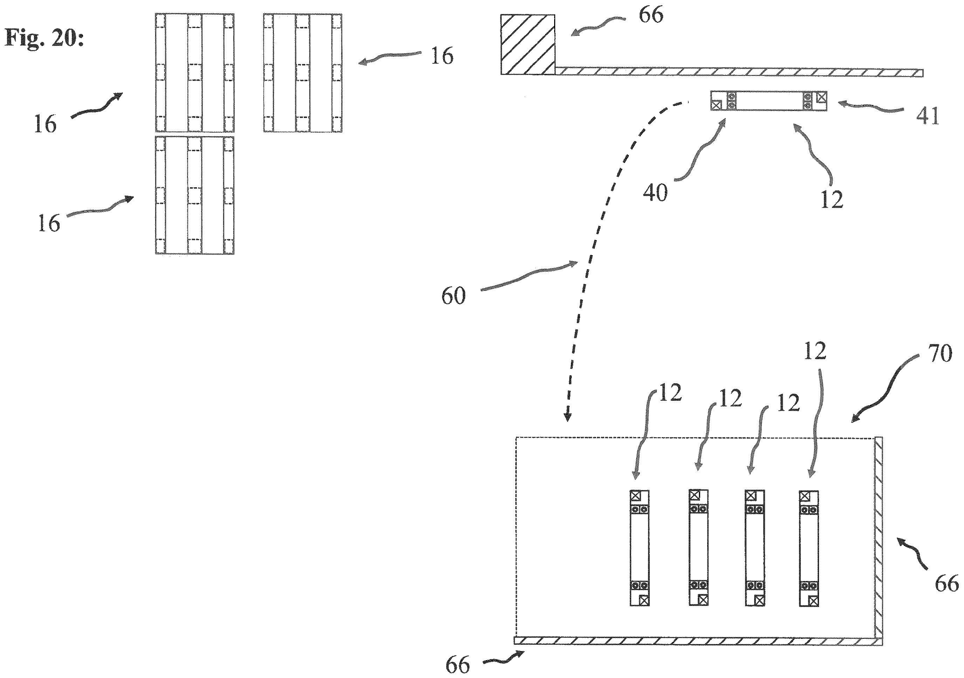

Fig. 20 zeigt eine schematische Draufsicht auf einen Lagerbereich, in welchem drei Ladungsträger (16), eine Wartezone (70) mit vier Fördereinheiten (12) und eine freie, beispielweise auf dem Rückweg befindliche, Fördereinheit (12) dargestellt sind. Die Bahnkurve (60) zeigt den geplanten Rückweg der Fördereinheit (12).

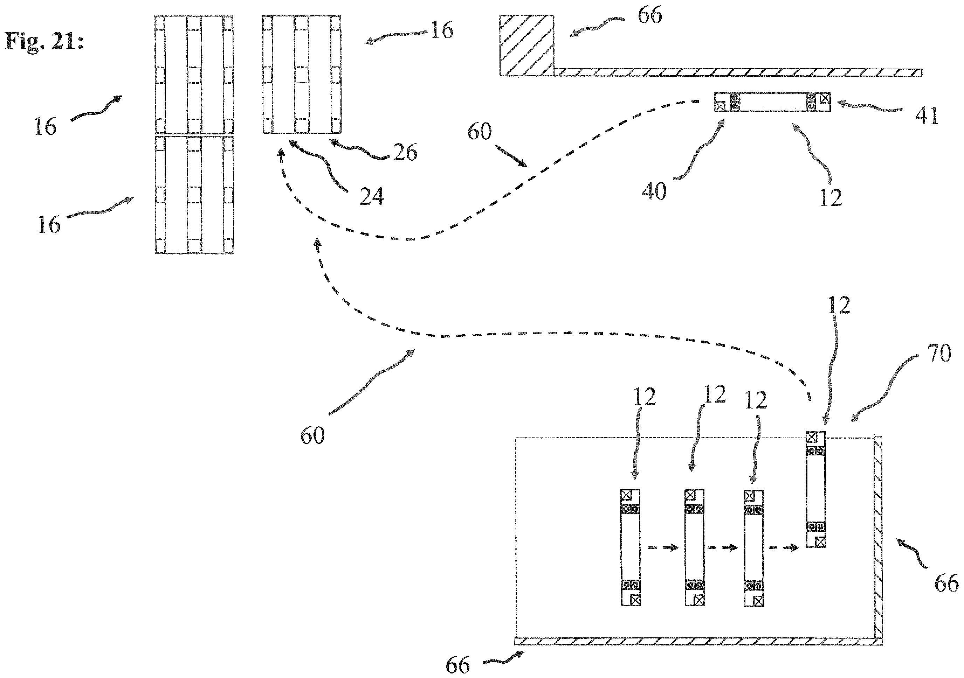

Fig. 21 zeigt ebenfalls den Lagerbereich, aus einer der in der Fig. 20 gezeigten Perspektive, bei dem nun das Fördersystem mit einem neuen Förderauftrag beauftragt worden ist. In diesem Fall wählt das Steuerungsverfahren zwei Fördereinheiten (12) aus, welche den Förderauftrag durchführen sollen. Die auf dem Rückweg befindliche Fördereinheit (12), sowie eine Fördereinheit (12) aus der Wartezone (70) werden hierfür ausgewählt. Ein weitergebildetes Steuerungsverfahren könnte allerdings aufgrund eines geringen Energiestatus der sich auf dem Rückweg befindlichen Fördereinheit (12), trotz der geringen Distanz zum Ladungsträger (16), auf deren Einsatz verzichten und zum Durchführen des Förderauftrags die ersten der beiden Fördereinheiten (12) aus der Wartezone (70) wählen. In diesem Fall würde die auf dem Rückweg befindliche Fördereinheit (12) zur Wartezone (70) zurückkehren und könnte dort aufgeladen werden.

Beide ausgewählten Fördereinheiten (12) fahren nun eigenständig in die vom Steuerungsverfahren bestimmte Förderposition in den Freileichtraum (24, 26) unter dem Ladungsträger (16). Spätestens beim Erreichen der Förderpositionen bilden die beiden Fördereinheiten (12) eine Fördereinrichtung (10).

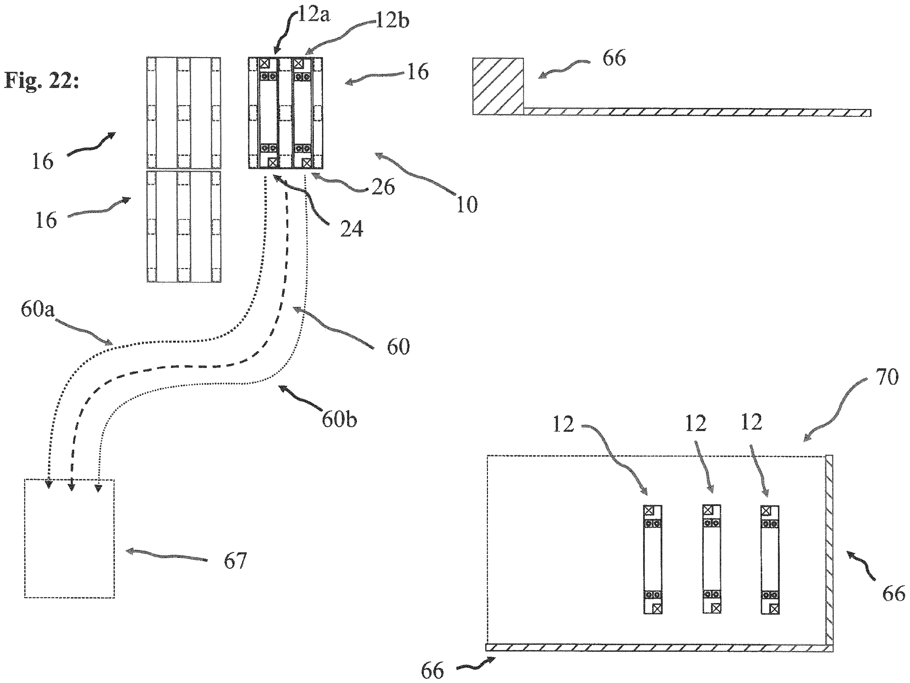

Fig. 22 zeigt ebenfalls den Lagerbereich, aus einer der in Fig. 20 gezeigten Perspektive. Die Fördereinheiten (12) befinden sich nun unterhalb des Ladungsträgers (16) und haben eine Fördereinheit (10) gebildet. Beide Fördereinheiten (12) bekommen drahtlos die Zielposition (67) des Ladungsträgers (16), sowie ihre Position innerhalb des Freilichtraumes (24, 26) vom nicht-dargestellten Steuerungsleitrechner zugeschickt, sodass nun beide Fördereinheiten (12) jeweils die eigenen Bahnkurve (60a, 60b), sowie die Bahnkurve (60) des Ladungsträgers berechnen können.

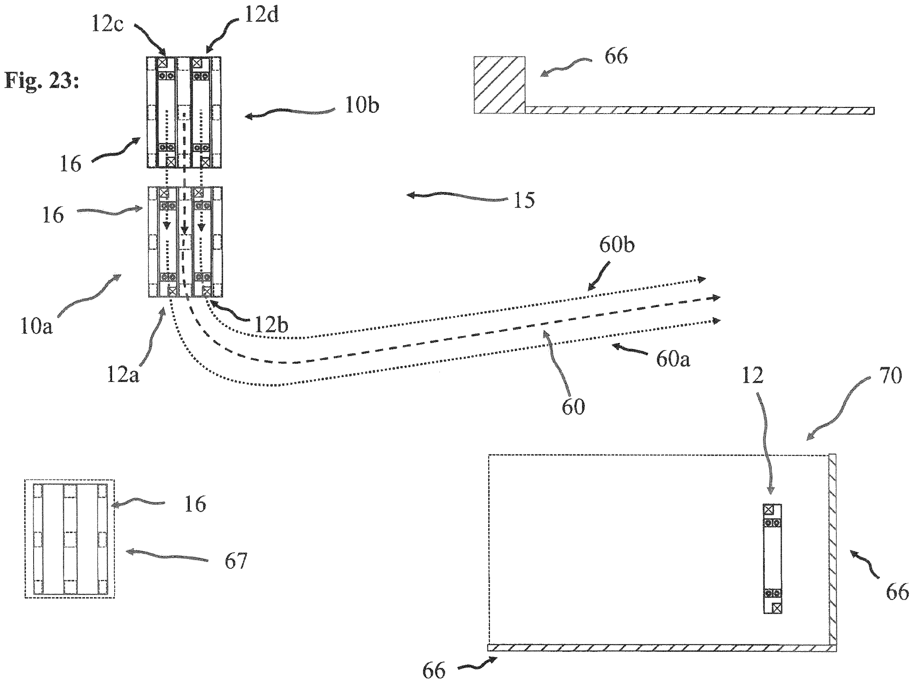

Fig. 23 zeigt ebenfalls in einer Draufsicht einen beispielhaften Lagerbereich. In der dargestellten Situation können zwei Förderaufträge derart ausgeführt werden, dass das Steuerungsverfahren die beiden Förderaufträge gemeinsam bearbeiten und eine vorteilhafte Kolonnenfahrt vorschlagen kann. In diesem Fall bilden die Fördereinrichtung (10a), bestehend aus den Fördereinheiten (12a, 12b), und die Fördereinrichtung (10b), bestehend aus den Fördereinheiten (12c, 12d), einen Förderkolonne (15). In dieser Förderkolonne (15) ist die nachfolgende Fördereinheit (10b) dazu bestrebt, der ersten, vorderen Fördereinheit (10a) auf der Bahnkurve (60) zu folgen. Bei einer vorteilhafter Ausführungsform des Steuerungsverfahrens wird dies dadurch ermöglicht, dass die Fördereinheiten (12c, 12d) der hinteren Fördereinrichtung (10b) Informationen zur besseren Folge ihrer Bahnkurven (60a) und (60b) drahtlos von Ihrer vorausfahrenden Fördereinrichtung (10a) empfangen. Das Ausführungsbeispiel des Steuerungsverfahrens würde, in der in Fig. 12 dargestellten Situation, die Fördereinheit (12a) der Fördereinheit (12c) und/oder die Fördereinheit (12b) der Fördereinheit (12d) Information zur besseren Folge der Bahnkurven (60a, 60b) zur Verfügung stellen. Diese Informationen können beispielsweise Informationen über Bodenunebenheiten und/oder stark variierende Reibwerte des Bodens sein.

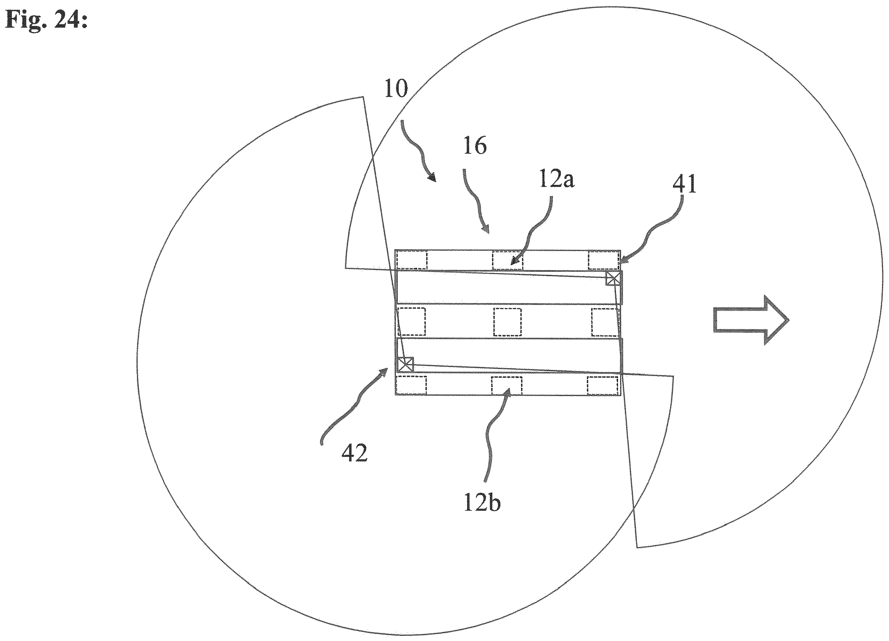

Fig. 24 zeigt eine Draufsicht auf eine Fördereinrichtung (10) gemäß eines zweiten Ausführungsbeispiels. Die Fördereinheit (10) besteht aus zwei unabhängigen Fördereinheiten (12a, 12b) und ist als kostengünstiges Ausführungsbeispiel ausgebildet. Vorteilhafterweise sind nur zwei Sensoreinheiten (41, 42) in der gesamten Fördereinrichtung (10) verbaut, nämlich eine Sensoreinheit pro Fördereinheit (12a, 12b). Die gegenseitige Absicherung erfolgt wie in der Beschreibung zu Fig. 13 erläutert. Je nach Fahrtrichtung und je nachdem welche Fördereinheit (12a, 12b) eine potentielle Kollision mit einem Hindernis detektiert, kann die Fördereinrichtung (10) sowohl durch eine aktive Detektionsbereichs als auch durch eine passive Detektionsbereichsverletzung gestoppt werden. Erkennt im dargestellten Ausführungsbeispiel die erste Fördereinheit (12a) eine potentielle Kollision mit einem Hindernis, wird sie ihre Geschwindigkeit reduzieren, oder einen ein Not-Stopp durchführen. Dies hat zur Folge, dass die erste Fördereinheit (12a) in den Erfassungsbereich der Sensoreinheit (42) der noch fahrenden zweiten Fördereinheit (12b) eindringt und dort zu einer aktiven Detektionsbereichsverletzung führt. Die zweite Fördereinheit (12b) wird ihre Geschwindigkeit entsprechend der ersten Fördereinheit (12a) anpassen und/oder ebenfalls einen Not-Stopp ausführen.

Im Umgekehrten Fall, nämlich wenn die zweite Fördereinheit (12b) ihre Geschwindigkeit reduziert und/oder einen Not-Stopp ausführt, wird dies zu einer passiven Detektionsbereichsverletzung bei der ersten Fördereinheit (12a) führen. Mit anderen Worten würde die zweite Fördereinheit (12b) durch die Verzögerung den Erfassungsbereich der ersten Sensoreinheit (41) der noch fahrenden ersten Fördereinheit (12a) verlassen. Mithin würde die erste Fördereinheit (12a) ihre Geschwindigkeit ebenfalls reduzieren und/oder einen Not-Stopp ausführen. In jedem Fall kommt die Fördereinheit (10) sicher zum Stehen.

### Bezugszeichenliste

- 10: Fördereinrichtung
- 10a: erste Fördereinrichtung
- 10b: zweite Fördereinrichtung
- 12: Fördereinheit
- 12a: erste Fördereinheit
- 12b: zweite Fördereinheit
- 16: Ladungsträger
- 17: Antriebseinheit
- 18: Tragelement
- 19: Detektionsebene
- 21: Boden
- 22: Längsachse einer Fördereinheit
- 24, 26: Freilichtraum des Ladungsträgers
- 25: Sensorsystem
- 30: Antriebssystem
- 40 - 43: Sensoreinheiten
- 40a - 43a: Erfassungsbereiche der jeweiligen Sensoreinheiten
- 51-54: Antriebseinheit
- 60: Bahnkurve der Fördereinrichtung
- 60a: Bahnkurve der ersten Fördereinheit
- 60b: Bahnkurve der zweiten Fördereinheit
- 66: Objekte
- 67: Zielposition

- α: Mindestdetektionswinkel
- β: Raumwinkelerfassungsbereich
- γ: Kippwinkel
- A: Grundfläche
- B: Fläche
- d: Abstand zwischen Boden und Detektionsebene
- h: Distanz zwischen der Oberkante des Ladungsträgers und der Detektionsebene

## Patentansprüche

1. Erkennungsverfahren für eine Fördereinrichtung (10) zum Fördern von beladenen oder unbeladenen Ladungsträgern (16), wobei
- die Fördereinrichtung (10) eine erste Fördereinheit (12a) und eine zweite Fördereinheit (12b) aufweist, wobei
- jede Fördereinheit (12a, 12b) relativ zur jeweils anderen Fördereinheit (12a, 12b) und unabhängig von der jeweils anderen Fördereinheit (12a, 12b) entlang einer beliebigen Fahrtrichtung bewegbar ist, und
- jede Fördereinheit (12a, 12b) jeweils ein Sensorsystem (25) zur Detektion von Umgebungsparametern und ein Steuersystem zur Steuerung der jeweiligen Fördereinheit (12a, 12b) umfasst, wobei eine Detektionsebene (19) des Sensorsystems (25) den Ladungsträger (16) im nicht-gehobenen Zustand zumindest teilweise schneidet, und
- die detektierten Umgebungsparameter vom Sensorsystem (25) an das Steuersystem übertragen werden,
**dadurch gekennzeichnet, dass**
- das Steuersystem dazu ausgebildet ist, anhand der detektierten Umgebungsparameter Ladungsträger (16) im Umfeld der Fördereinheit zu erkennen.

2. Erkennungsverfahren nach Anspruch 1, **dadurch gekennzeichnet, dass** das Steuersystem den Ladungsträger (16) anhand seiner charakteristischen Form erkennt.

3. Erkennungsverfahren nach einem der vorhergehenden Ansprüche, **dadurch gekennzeichnet, dass** das Steuersystem die relative Position und Orientierung der jeweiligen Fördereinheit (12a, 12b) im Verhältnis zum erkannten Ladungsträger (16) bestimmt.

4. Erkennungsverfahren nach einem der vorhergehenden Ansprüche, **dadurch gekennzeichnet, dass** das Steuersystem die Position und Orientierung des Ladungsträgers (16) im Raum bestimmt.

5. Erkennungsverfahren nach einem der vorhergehenden Ansprüche, **dadurch gekennzeichnet, dass** das Steuersystem den Ladungsträger während des Einfahrtprozesses erkennt.

6. Erkennungsverfahren nach einem der vorhergehenden Ansprüche, **dadurch gekennzeichnet, dass** das Sensorsystem (25) von mindestens einer der Fördereinheiten (12a, 12b), während des Einfahrtprozesses, auf der der Fahrtrichtung abgewandten Seite Umgebungsparameter detektiert, welche durch das Steuersystem zur Bestimmung der Position der jeweiligen Fördereinheit (12a, 12b) im Raum genutzt werden.

7. Erkennungsverfahren nach einem der vorhergehenden Ansprüche, **dadurch gekennzeichnet, dass** das Sensorsystem (25) von mindestens einer der Fördereinheiten (12a, 12b), während die jeweilige Fördereinheit (12a, 12b) den Ladungsträger (16) zumindest teilweise unterfahren hat, auf der der Fahrtrichtung zugewandten Seite Umgebungsparameter detektiert, anhand welcher das Steuersystem das Umfeld in Fahrtrichtung, hinter dem unterfahrenen Ladungsträger (16), ermittelt.

8. Erkennungsverfahren nach einem der vorhergehenden Ansprüche, **dadurch gekennzeichnet, dass** das Steuersystem, während die jeweilige Fördereinheit (12a, 12b) den Ladungsträger (16) zumindest teilweise unterfahren hat, ermittelt, ob sich in Fahrtrichtung, hinter dem unterfahrenen Ladungsträger (16), kein weiterer Ladungsträger (16), ein oder mehrere weitere Ladungsträger (16), oder ein Hindernis befindet.

9. Erkennungsverfahren nach einem der vorhergehenden Ansprüche, **dadurch gekennzeichnet, dass** sich eine Detektionsebene des Sensorsystems (25) durch einen, im Einfahrtprozess quer zu Fahrtrichtung befindlichen, Sichtbereich des Ladungsträgers (16) hindurch erstreckt und die durch den Sichtbereich hindurch detektierten Umgebungsparameter vom Steuersystem zur Erfassung des seitlichen Umfelds des Ladungsträgers genutzt werden.

10. Erkennungsverfahren nach einem der vorhergehenden Ansprüche, **dadurch gekennzeichnet, dass** eine der Fördereinheiten (12a, 12b) ein Sensorsystem (25) nach Anspruch 6 umfasst und die jeweils andere Fördereinheiten (12a, 12b) ein Sensorsystem (25) nach Anspruch 7 aufweist, so dass die Detektion der Umgebungsparameter in Fahrtrichtung und entgegen der Fahrtrichtung zeitgleich erfolgt.

11. Erkennungsverfahren nach einem der vorhergehenden Ansprüche, **dadurch gekennzeichnet, dass** das Steuersystem ein integraler Bestandteil des Sensorsystems ist.

12. Erkennungsverfahren nach einem der vorhergehenden Ansprüche, **dadurch gekennzeichnet, dass** das Steuersystem der ersten Fördereinheit (12a) nur in einem Teil der Umgebung der Fördereinrichtung (10) Ladungsträger erkennt und das Steuersystem der zweiten Fördereinheit (12b) im anderen Teil der Umgebung der Fördereinrichtung (10) Ladungsträger erkennt.

13. Erkennungsverfahren nach einem der vorhergehenden Ansprüche, **dadurch gekennzeichnet, dass** die Steuersysteme der ersten und der zweiten Fördereinheit (12a, 12b) einer Fördereinrichtung (10) informationskommunizierend verbunden sind, so dass Informationen über einen erkannten Ladungsträger (16) zwischen den Steuersystemen der ersten und der zweiten Fördereinheit (12a, 12b) ausgetauscht werden können.

14. Fördereinrichtung (10) zum Fördern von beladenen oder unbeladenen Ladungsträgern mit Mitteln zur Durchführung des Erkennungsverfahrens nach einem der vorhergehenden Ansprüche.
